# EUROPEAN PATENT APPLICATION

(11) **EP 4 060 081 A1**
(43) Date of publication of application: **21.09.2022**
(21) Application number: 21162974.6
(22) Date of filing: 16.03.2021
(51) Int. Cl.: C25B 1/01, C25B 11/031, C25B 11/052, C25B 11/061, C25B 11/063, C25B 11/069, C25B 11/091, B01J 23/755, C23C 4/00, C23C 18/00

(54) **ELECTRODE FOR GAS EVOLUTION IN ELECTROLYTIC PROCESSES**

(71) Applicant: Industrie De Nora S.P.A., 20134 Milano (IT)
(72) Inventor: MATIENZO, DJ Donn, 20134 Milano (IT); DI BARI, Chiara, 20134 Milano (IT); PINO, Francesco, 20134 Milano (IT); INSTULI, Emanuele, 20134 Milano (IT)
(74) Representative: Reitstötter Kinzebach

(57) **Abstract**

The present invention concerns an electrode for gas evolution in electrolytic processes comprising a metal substrate and a coating formed on said substrate, said coating comprising at least a catalytic porous outer layer containing regions of porous nickel oxide dispersed within a solid nickel oxide binder, and a method for the production of such an electrode from preformed nickel vanadium oxide particles.

## Description

### FIELD OF THE INVENTION

The present invention concerns an electrode for gas evolution in electrolytic processes comprising a nickel substrate and a nickel-based catalytic coating. Such electrodes can particularly be employed as anodes in an electrochemical cell, for instance as an oxygen-evolving anode in alkaline water electrolysis.

### BACKGROUND OF THE INVENTION

Alkaline water electrolysis is typically carried out in electrochemical cells where an anodic and a cathodic compartment are divided by a suitable separator such as a diaphragm or a membrane. An aqueous alkaline solution at a pH higher than 7, for instance an aqueous KOH solution, is supplied to the cell and an electrical current flow is established between electrodes in the cathodic and anodic compartment, respectively, i.e. between cathode and anode, at a potential difference (cell voltage) with a typical range of 1.8 to 2.4 V. Under these conditions, water is split into its constituents so that gaseous hydrogen evolves at the cathode and gaseous oxygen evolves at the anode. The gaseous products are removed from the cell so that the cell can be operated in a continuous fashion. The anodic oxygen evolution reaction in alkaline media can be summarized as follows:

4 OH⁻ → O₂ + 2 H₂O + 4 e⁻

Alkaline water electrolysis is typically carried out in a temperature range from 40 to 90 °C. Alkaline water electrolysis is a promising technology in the field of energy storage, particularly storage of energy from fluctuating renewable energy sources such as solar and wind energy.

In this respect, it is particularly important to reduce the cost of the technology in terms of less expensive equipment, such as less expensive electrodes, but also in terms of efficiency of the overall process. One important aspect of cell efficiency concerns the required cell voltage in order to effectively generate water electrolysis. The overall cell voltage is essentially governed by the reversible voltage, i.e. the thermodynamic contribution to the overall reaction, voltage losses due to Ohmic resistances in the system, the hydrogen overpotential relating to the kinetics of the hydrogen evolution reaction at the cathode and the oxygen overpotential relating to the kinetics of the oxygen evolution reaction at the anode.

The oxygen evolution reaction has a sluggish kinetic, which is the cause of the high overpotential of the anode. The result is the increase of the operating cell voltage and the difficulty of the large-scale commercialization of the technology.

Moreover, electrodes for water electrolysis should exhibit a certain resistance to unprotected shutdowns. In fact, during typical operation of an electrolysis plant made of a stack of single electrochemical cells, it is often requested to stop the power supply due to technical problems maintenance, causing and inversion of polarity harmful for the electrodes. Such inversion is usually avoided using an external polarisation system (or polarizer) which maintains the electrical current flow in the desired direction. This ancillary component circumvents the potential electrode degradation caused by metal dissolution or electrode corrosion but increase the investment cost of the system.

In prior art, preferred anodes/anodic catalysts for alkaline water electrolysis include bare nickel (Ni) electrodes, Raney nickel (Ni+Al) electrodes and electrodes having iridium (Ir) oxide-based catalytic coatings.

A bare nickel electrode is formed by a nickel substrate only, such as a Ni mesh, which can easily be manufactured at low cost but which exhibits a high oxygen overpotential resulting in sluggish kinetics.

Raney nickel electrodes are manufactured by thin film deposition of the catalytic powder of Ni+AI by plasma spray technique. At the industrial level, plasma spray technique is not often used for catalytic coatings due to the high cost of production and health and safety hazards associated with the technique, such as noise, explosiveness, intense flame at temperatures above 3000°C, fumes, etc. Moreover, the Raney nickel manufacturing process involves an activation process which is accomplished by leaching of aluminium from the catalyst coating, leaving almost pure nickel on the surface and increasing the surface area substantially. During the reaction of Al dissolution, H₂ is produced which constitutes a problem during the manufacturing process due to the abrupt exothermic reaction. Another technical problem of Raney nickel deposited via plasma spray is the resulting rather indented morphology of the coating. In a zero-gap cell, where the electrode is in contact with the membrane, the sharp indented surface may cause damage to the membrane.

Electrodes with iridium-based catalytic coatings are produced by thermal decomposition which is a well-established technology providing less hazards. However, iridium used in these electrodes is one of the least abundant noble metals in the earth's crust resulting not only in a high price but also in difficulties purchasing bulk quantities for industrial-scale manufacturing processes (for instance, gold is 40 times more abundant and platinum is 10 times more abundant than iridium). Moreover, Iridium-based coatings are typically multilayer coatings resulting in costly manufacturing processes. The multilayer catalytic coatings of prior art can comprise, for instance, a LiNiOₓ interlayer directly applied on a Ni substrate, a NiCoOₓ active layer applied to the interlayer and an iridium oxide outer layer. This multilayer composition exhibits a low resistance to unprotected shutdowns because Co and Ir are typically dissolved into the electrolyte solution during inversion of polarity.

In Applicant's Italian patent application IT 2020000020575, an improved electrode, especially for alkaline water electrolysis, has been described which avoids costly noble metal-based catalytic coatings by employing a noble metal-free porous nickel oxide catalytic coating. The porous coating is obtained by leaching vanadium from a nickel oxide/vanadium oxide coating. However, it has been found that leaching of vanadium from the coating can decrease mechanical stability of the coating.

It is therefore an object of the present invention to provide a cost-effective electrode having a porous nickel oxide coating which exhibits an improved mechanical stability while maintaining the low oxygen overvoltage in alkaline water electrolysis applications found in IT 2020000020575.

### SUMMARY OF THE INVENTION

The invention is based on the concept of an electrochemically active thin film for oxygen evolution exhibiting a very high surface area. A high surface area of the coating allows a bigger quantity of electrolyte to be in contact with the catalyst and its active sites, boosting the electrochemical performances, for instance for the production of gaseous oxygen (O₂). By employing a coating which comprises porous nickel oxide regions dispersed within a homogeneous nickel oxide binder, it has been possible to create a stable highly porous nickel oxide coating which is particularly suitable for oxygen evolution reactions.

Various aspects of the present invention are described in the appended claims.

The present invention concerns an electrode for gas evolution in electrolytic processes comprising a metal substrate and a coating formed on said substrate, wherein said coating comprises at least a catalytic porous outer layer containing regions of porous nickel oxide dispersed within a nickel oxide binder. The coating of the present invention exhibits a high porosity while simultaneously maintaining a high mechanical stability.

A "nickel oxide binder" in the sense of the present invention is an essentially continuous, essentially homogeneous, phase of nickel oxide. Such a continuous phase can be produced by applying a homogeneous precursor solution containing a nickel salt on a substrate, for instance by spraying or brushing, followed by a thermal treatment. As known in the art, such a thermal treatment will result in an essentially homogeneous coating which, however, in the context of the present invention acts as a binder. Such essentially homogeneous nickel oxide coatings are mechanically very stable but exhibited a high overpotential towards oxygen evolution and are therefore not suitable for alkaline water electrolysis.

A "region of porous nickel oxide" in the sense of the present invention is a region having an increased porosity as compared to the surrounding nickel oxide binder. The regions of porous nickel oxide are therefore essentially localised regions within the nickel oxide binder where the porosity is substantially higher, generally at least twice as high, than any residual porosity of the nickel oxide binder. Accordingly, the present invention suggests lowering the overpotential towards oxygen evolution while maintaining the mechanical stability of the coating by providing regions of porous nickel oxide dispersed within the nickel oxide binder.

The regions of porous nickel oxide within the nickel oxide binder can be obtained in various manners. According to one embodiment of the present invention, the catalytic coating exhibits essentially the characteristics of a solid/solid dispersion where solid porous nickel oxide particles are embedded in a solid nickel oxide binder. The solid nickel porous oxide particles therefore constitute the above defined regions of porous nickel oxide. Accordingly, the present invention suggests a novel application technique for applying catalyst particles in powder form onto electrode substrates.

For instance, in a preferred embodiment of the present invention, the regions of porous nickel oxide are based on preformed nickel vanadium oxide particles (Ni(V)Oₓ) which obtain their porosity by employing the concept of removal of a sacrificial metal by selective leaching from metallurgy, namely by removing vanadium oxide from said particles by alkaline leaching of the vanadium oxide component.

In one embodiment, the catalytic porous outer layer can be obtained by thermal treatment of a suitable precursor solution applied to the metal substrate of the electrode. The precursor solution can comprise suitable preformed solid particles dispersed in a solution of a nickel salt. Such preformed solid particles can be obtained, for instance, via chemical synthesis methods described in more detail below. Upon thermal treatment, the nickel salt defines the essentially homogeneous binder phase of the catalytic coating while the preformed solid particles define the regions of porous nickel oxide. To this effect, the preformed solid particles can be preformed porous nickel oxide particles which are obtained by preparing nickel vanadium oxide particles and subsequent leaching of the vanadium component from the particles. Preferably, the preformed solid particles of the precursor solution are nickel oxide and vanadium oxide particles and the regions of porous nickel oxide are obtained by leaching the vanadium oxide component from the formed catalytic layer after thermal treatment of the applied precursor solution. The thermal treatment is preferably carried out at a temperature well below the melting temperature of nickel, typically at temperatures up to 500 °C at which the preformed particles remain stable and intact during the application process of the precursor solution. Accordingly, after leaching of vanadium, the particles constitute well-defined regions of porous nickel oxide within the solid nickel oxide binder and any sintering of the particles can be avoided.

Accordingly, the nickel oxide coating is produced by thermal decomposition which is a well-developed process which easily translates into large-scale production. Moreover, thermal decomposition techniques are easily tunable to a large variety of nickel substrates, independently from geometry or size of the substrate. In addition, the coating is obtained from nickel and vanadium only, i.e. highly abundant metals in the earth's crust and considerably less expensive than noble metals such as iridium. Due to the high abundancy, bulk purchases necessary for industrial-scale production are easily accomplished. Moreover, the leaching step necessary to remove vanadium oxide from the coating, is less challenging than the leaching step of Raney nickel production, because leaching of vanadium does not produce hydrogen gas during its dissolution, thus avoiding associative health and safety hazards. Finally, the morphology of the coating produced according to the method of the present invention is flat thus avoiding damages of membranes in zero-gap electrolysis cells.

Preferably, the regions of porous nickel oxide have diameters in the range of 50 nm to 10 µm, preferably in the range of 100 to 400 nm. In the case of preformed nickel vanadium oxide particles, the preformed particles maintain their structural stability during the application and leaching processes. Therefore, the dimensions of the resulting desired regions of porous nickel oxide essentially correspond to the dimensions of the initial particles. If the regions of porous nickel oxide/preformed particles have an irregular shape, the "diameter" in the sense of the present invention corresponds to the diameter of a sphere into which the particles can be inscribed.

The metal substrate of the electrode of the present invention is preferably a substrate selected from the group consisting of nickel-based substrates, titanium-based substrates and iron-based substrates. Nickel-based substrates include nickel substrates, nickel alloy substrates (particularly NiFe alloys and NiCo alloys and combinations thereof) and nickel oxide substrates. Iron-based substrates include iron alloys such as stainless steel. Metallic nickel substrates are particularly preferred in the context of the present invention. Like bare nickel electrodes, the electrode of the present invention benefits from the catalytic properties of nickel but without exhibiting the sluggish kinetics of bare nickel electrodes and without requiring additional noble metals or other metals for improving reaction kinetics.

Therefore, in a preferred embodiment, the coating of the present invention is essentially free from noble metals such as iridium. "Essentially free" means that the corresponding metals are typically outside any detectable range when using, for instance, typical laboratory X-ray diffraction (XRD) techniques.

When leaching of the vanadium component is employed to obtain the desired porosity, some residual vanadium will generally remain in the resulting solid porous nickel oxide particles. Therefore, the term "porous nickel oxide" is not intended to exclude the presence of any residual vanadium, as long as nickel remains the dominant metal by weight. Moreover, due to the characteristics of the formation of porous nickel oxide by leaching of vanadium in alkaline media, two different phases of nickel oxide will usually be present in the outer layer (i.e. different oxidation states of nickel), namely nickel oxide (NiO) and nickel hydroxide (Ni(OH)₂), respectively.

Thus, in one embodiment, the catalytic outer layer consists of nickel oxide (NiO) and nickel hydroxide (Ni(OH)₂) only, with a possible residual amount of vanadium. Accordingly, the catalyst does not contain any scarce and expensive metals.

In one embodiment, the regions of porous nickel oxide in the porous outer layer have a surface area of at least 20 m²/g, determined according to BET (Brunauer, Emmett, Teller)-measurements. Preferably, the surface area of the porous outer layer is at least 30, more preferably at least 40 m²/g (BET). In certain embodiments, the surface area of the porous outer layer is comprised between 20 and 80, between 30 and 60 m²/g (BET). Accordingly, the electrode of the invention has a catalytic layer with a highly porous nickel-based catalytic outer layer which is, for instance, considerably higher than the surface area of iridium-based catalytic coatings which are typically in a range below 10 m²/g.

In a preferred embodiment, the coating comprises a nickel-based interlayer deposited between the nickel substrate and the catalytic porous outer layer. Preferably, the nickel-based interlayer is a LiNiOx interlayer directly applied on the metal substrate. Such interlayers and their method of manufacturing are known from noble metal based catalytic coatings. It would like it has been found that the presence of an interlayer increases the lifetime of the electrode. It is also been found that while the lifetime increases with thickness of the interlayer, the signals that the interlayer also increases the overpotential against oxygen evolution. Consequently, depending on the intended application, the electrode can be optimized with respect to lifetime or oxygen evolution overpotential.

In one embodiment, the porous outer layer has a thickness in the range of 5 to 40 micrometre (µm), preferably in the range of 10-20 µm. The porous outer layer has a preferred nickel loading in a range from 5 to 50 g/m² referred to the metal element. When applied directly to the nickel substrate, the catalytic coating is particularly useful for low current density applications (e.g. in the range of 1 kA/m² or up to several kA/m²). For these applications, a preferred nickel loading is typically in the range of 10 g/m². If the porous outer layer is applied on a nickel interlayer, these embodiments can be used for high current density applications (e.g. at 10 kA/m² and more) so that higher nickel loadings, typically in the range of 20 g/m² and more, are preferred.

The coating consisting of porous outer layer and interlayer preferably has a thickness in a range from 30 to 300 µm, preferably approximately 50 µm.

Preferably, the nickel substrate is a nickel mesh which can be employed in a variety of configurations regarding mesh thickness and mesh geometry. Preferred mesh thicknesses are in the range of 0.2 to 1 mm, preferably around 0.5 mm. Typical mesh openings are rhombic openings having a long width in range of 2 to 10 mm and a short width in the range of 1 to 5 mm.

Due to its low value of oxygen overvoltage, the electrode of the present invention is preferably used as an anode for oxygen evolution, particularly as an anode in an electrolysis cell for alkaline water electrolysis.

The present invention also concerns a method for the production of an electrode, comprising the steps of:
a) dispersing preformed nickel vanadium oxide (Ni(V)Oₓ) particles in a solution comprising a nickel salt to obtain a precursor suspension;
b) applying the precursor suspension to a metal substrate to obtain an applied coating;
c) drying the applied coating at a temperature in a range from 80 - 150 °C, typically at 90 °C, preferably for 5-30 minutes, typically for 10 minutes;
d) calcinating the applied coating at a temperature in a range from 300 - 500 °C, typically at 400 °C, preferably for 5 to 15 minutes, typically for 10 minutes, for oxidation of the metal salts into metal oxides;
e) repeating steps b) to d) until a coating having the desired specific load of nickel is obtained;
f) heat treating said coating at a temperature in the range from 300-500 °C, typically at 400 °C, for preferably 0.5 to 2 hours, typically for 1 hour;
g) leaching of vanadium from said coating in an alkaline bath.

The preparation of the preformed solid nickel vanadium oxide particles used in step a) can be based on a method to synthesize Ru-V binary oxide particles via a polymerisable complex method as described in Yokoshima, K., et al. Electrochemical supercapacitor behavior of nanoparticulate rutile-type Ru1-xVxO2. Journal of Power Sources, 2006, 160.2: 1480-1486*.* The method described therein was adapted to the synthesis of nickel vanadium oxide particles. In Yokoshima et al., the prepared ruthenium vanadium oxide particles are employed as a supercapacitor. Yokoshima et al. did not envision selective leaching of the vanadium compound nor the use of such particles as porous catalyst particles in a catalytic coating of an electrode.

In a preferred embodiment, the preformed solid nickel vanadium oxide particles used in step a) are obtained from a mixture of suitable metal precursors such as salts or nitrates of the metals concerned, for instance Ni(NO₃)₂ ▪ 6H₂O and VCl₃, organic solvents, for instance ethanol and ethylene glycol, and citric acid. After a first heating step to evaporated ethanol, the mixture was heated to obtain a rigid resin. The resin was then pyrolyzed in air to obtain the final preformed, synthesized nickel vanadium oxide particles (Ni(V)Ox).

The solution comprising a nickel salt which forms the nickel oxide binder in the coating of the present invention can be formed by dissolving the nickel salt in an aqueous alcohol solution, for instance in water and isopropanol, where the preformed Ni(V)Oₓ particles are suspended. The nickel salt is preferably a nickel halide, for example nickel chloride. Apart from nickel, other suitable metal oxide binder can be envisioned for different electrochemical applications. Also, the process conditions can be adapted for each type of metal oxide binder.

In step b), the application of the precursor suspension of step a) to a metal substrate and be effected using different techniques known in the art such as brushing or spaying.

The drying and calcinating steps c) and d) yielded to the formation of a coating layer in which nickel oxide acts as an inorganic binder for the pre-synthesized nickel oxide catalyst particles.

According to step e), the nickel oxide outer catalytic layer can be created in a series of layers in order to precisely tailor the desired nickel load. As only one coating composition is used, the manufacturing of the coated electrode is faster and leaner than prior art methods and therefore less expensive. Moreover, the oxide coating is produced by thermal decomposition which is our well-developed process on industrial-scale coating production.

The final heat treatment according to step f) enhances the lifetime of the electrode and can also help decreasing the oxygen overpotential.

The concept of selective leaching of vanadium from mixed oxide metal particles of step g) can be adapted from studies found in the literature where vanadium has been recovered from fly ash by leaching, as for instance described in Navarro, R., et al. Vanadium recovery from oil fly ash by leaching, precipitation and solvent extraction processes. Waste Management, 2007, 27.3: 425-438 and Tsai, S. and M. Tsai. A study of the extraction of vanadium and nickel in oil-fired fly ash. Resources, Conservation and Recycling, 1998, 22.3-4: 163-176*.* In the process of the present invention, after step f), the regions/particles of the coating where nickel vanadium oxide mixtures are present comprise two separated crystal phases, namely nickel oxide (NiO) and vanadium oxide (VO). In step g) the vanadium oxide is removed by leaching with an alkaline solution (e.g. 6M KOH at 80°C) in order to obtain an activated microporous Ni oxide structure within the particles (specifically mixed phases of NiO and Ni(OH)₂). Accordingly, step f) is preferably carried out in an aqueous alkaline hydroxide solution, for instance in a 6M NaOH or 6M KOH solution at a temperature between 60 and 100 °C, typically at a temperature of 80 °C for a time period in the range from 12 and 36 hours, typically for a time period of 24 hours.

In a preferred embodiment, an initial step a0) is performed before step a) where a nickel-based interlayer is applied onto the nickel substrate.

The present invention is associated with particular advantages: It has surprisingly been found that although no noble metals are used in the catalytic coating of the electrode of the present invention, the increased porosity and the similarly increased active surface area of the coating increases the electrochemical activity of the material significantly, for instance by reducing the overpotential towards oxygen evolution in alkaline water electrolysis. The increased porosity is obtained by leaching vanadium from the preformed catalyst particles leaving voids/pores in the coating which increase the reaction sites for oxygen evolution which therefore lowers the overall oxygen overpotential values. Moreover, by restricting the leaching process to regions in the coating which are defined by the preformed particles, the remainder of the coating, i.e. the nickel oxide binder, is essentially left unaltered and therefore defines the improved mechanical stability of the overall structure. In addition, the leaching step according to the present invention does not release hydrogen, as compared, for instance, to known leaching procedures in NiAl and NiZn coatings where evolving hydrogen gas could lead to damage of the coating structure. Finally, according to the present invention, an inorganic metal binder such as nickel oxide is used. Nickel oxide binder is particularly preferred when the electrode is used for alkaline water electrolysis. For other applications, however, different metal binders can be employed depending on the desired mechanical stability of the coating and the intended electrochemical application.

### BRIEF DESCRIPTION OF THE DRAWINGS

The invention will now be described in connection with certain preferred embodiments and corresponding figures in more detail.

In the drawings:
- Fig. 1: depicts a schematic drawing of an electrode according to the present invention;
- Fig. 2: shows an SEM image of an electrode according to the present invention overlaid by the results of an EDX scan;
- Fig. 3: shows XRD patterns of an electrode according to the present invention before and after vanadium leaching;
- Fig. 4: shows SEM images of an electrode of the present invention and a counterexample electrode before and after vanadium leaching;
- Fig. 5: shows the oxygen overpotential results determined by CISEP tests; and
- Fig. 6: shows the results of an accelerated lifetime tests.

### DETAILED DESCRIPTION OF PREFERRED EMBODIMENTS

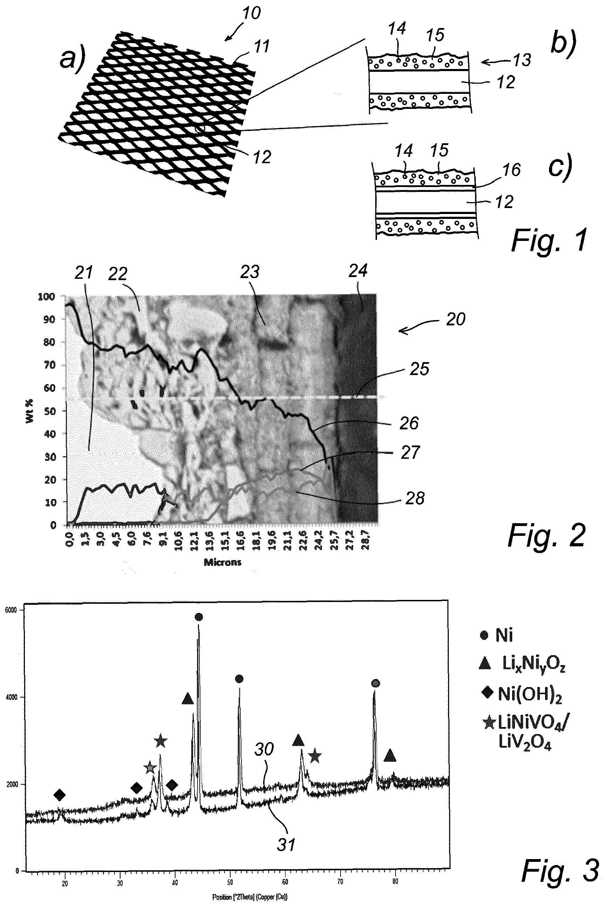

Fig. 1 shows in drawing a) a schematic representation of an electrode 10 according to the present invention. The electrode comprises a metal substrate, in the present case a coated nickel mesh 11 having a typical thickness in the range of 0.1 to 5 mm. Drawings b) and c) of Fig. 1 show enlarged cross-sectional views of a coated wire 12 of the mesh 1 according to two alternatives of the coating of the present invention. According to alternative b) the cross-sectional view depicts the nickel substrate, i.e. nickel wire 12 and a porous outer layer 13 comprising solid porous nickel vanadium oxide particles 14 dispersed in a nickel oxide binder 15. The coating according to alternative c) corresponds to alternative b) except that a LiNi-intermediate layer 16 is applied directly onto the nickel wire substrate 12 and the porous outer layer 13, also comprising solid porous nickel vanadium oxide particles 14 dispersed in a nickel oxide binder 15, is arranged on top of the intermediate layer 16.

### Example 1: Preparation of coating suspension

### a) Preparation of preformed solid catalyst particles via chemical synthesis

The synthesis procedure of K. Yokoshima et al. mentioned above was taken as example and modified to synthesize the Ni(V)Oₓ catalysts: A mixture of the metal precursors (Ni(NO₃)₂ ▪ 6H₂O and VCl₃), organic solvents (ethanol and ethylene glycol) and citric acid was thoroughly mixed at 25 °C for 2 h then at 60 °C for 12 h. After evaporating ethanol by heating the mixture at 90 °C for 4 h, the solution was heated at 130 °C for 6 h to obtain a rigid resin. The resin was then pyrolyzed in air at 400 °C for 1 h to obtain the final pre-synthesized Ni(V)Oₓ particles having diameters in the range of 100 to 200 nm.

### b) Preparation of coating solution

Nickel chloride was dissolved in water and isopropanol (1:1 vol. ratio). Nafion (a sulfonated tetrafluoroethylene based fluoropolymer-copolymer commercialized by DuPont de Nemours, Inc.) was added as an ionomer.

### c) Dispersing preformed solid catalyst particles and coating solution

The preformed solid particles obtained in a) were added to the solution prepared b) and any agglomerates where dispersed by sonicating and magnetics stirring to obtain the final coating suspension. The Ni(V)Oₓ particles in coating dispersion maintain their initial size in the range of 100 to 200 nm.

### Example 2 (Ex2): Preparation of a nickel mesh electrode with a Ni(V)Oₓ-particle/NiOx-binder coating without interlayer

For preparing 1 m² of coated mesh, a woven nickel mesh having a thickness of 0.5 mm having rhombic openings of 5 mm long width and 2.8 mm short with, was sandblast and etched in a hydrochloric acid solution. The coating suspension of Example 1 was deposited by brushing on each side of the mesh, dried at 90 °C for 10 minutes and calcinated at 400 °C for 10 minutes. The deposition, drying and calcination steps were repeated until a final nickel loading of 10 g/m² projected area was reached (both in the binder and particle regions). Subsequently, the coated electrode was post-baked at 400 °C for 1 hour. Finally, the electrode was leached in an alkaline 6M KOH bath for vanadium removal at a temperature of 80 °C for a total time of 24 hours.

### Example 3 (Ex3): Preparation of a nickel mesh electrode with a Ni(V)Ox-particle/NiOx-binder coating with interlayer

A nickel mesh similar to Example 2 was provided with an interlayer composed of Li_{0.5}Ni_{1.5}O₂. The interlayer was obtained by coating the nickel mesh on both sides with a solution comprising nickel acetate and lithium acetate in repeated cycles of drying (at 80 °C for 10 minutes) and baking (at 500 °C for 15 minutes) until a nickel loading of 8 g/m² projected area and a lithium loading of 0.3 g/m² projected area was reached.

The coating suspension of Example 1 was deposited on the interlayer and vanadium was leached as described in Example 2 to obtain the final electrode.

### Counterexample 4 (CEx4)

Counterexample 4 corresponds to an electrode with a noble metal based catalytic coating commercialized by the applicant. A nickel wire woven mesh with a 0.17mm diameter wire comprising a three-layer coating made of a LiNiO base layer, a NiCoOₓ interlayer and a IrOₓ top layer was obtained by sequentially applying via brushing and thermally decomposing each corresponding precursor solution onto the mesh substrate (or the respective underlying layer).

### Counterexample 5 (CEx5)

Counterexample 5 corresponds to the further electrode with a noble metal based catalytic coating commercialized by the applicant. On a nickel mesh similar to Example 2, comprising a single layer coating made of a mixture comprising LiNiIrOₓ and IrO₂ was applied.

### Counterexample 6 (CEx6)

The bare nickel mesh electrode of Example 2 without any coating was used as a further counterexample for comparison purposes.

### Counterexample 7 (CEx7)

The bare nickel mesh electrode of Example 2 with a coating consisting of nickel binder only was used as a further counterexample. This effect, the coating solution of Example 1 b) was applied in a similar manner as described for coating suspension of Example 2 until a nickel loading in the binder coating of 10 g/m² was reached.

The electrodes of Examples 2 and 3 according to the present invention have been characterized using different techniques and compared with Counterexamples 4 to 7.

### Counterexample 8 (CEx8)

The bare nickel mesh electrode of Example 2 was provided with a coating according to applicant's Italian patent application IT 2020000020575, i.e. with a leached Ni(V)Oₓ coating only without preformed (pre-synthesized) particles.

The electrodes of Examples 2 and 3 according to the present invention have been characterized using different techniques and compared with Counterexamples 4 to 8.

### A. Mechanical and Chemical Coating Characteristics

### A.1 Homogeneity

An electrode prepared according to Example 3 (with interlayer) was characterized using Scanning Electron Microscopy (SEM) and Energy-Dispersive X-ray Spectroscopy (EDX) techniques. Fig. 2 shows an SEM image 20 of a cross-section of the electrode overlaid by the results of an EDX scan. The SEM image 20 shows the bare nickel substrate 21, the Li_{0.5}Ni_{1.5}O₂ interlayer 22 and the Ni(V)Oₓ catalytic outer layer 23. The darker region 24 on the right-hand side of the image is a carbon resin stemming from sample preparation. Overlaid to image 20 are the results of an EDX scan along scan line 25 showing the weight percentages (wt%) of nickel (line 26), vanadium (line 27) and oxygen (line 28), respectively. The sample was obtained after the final leaching step but, as can be taken from Fig. 2, residual vanadium is still present in the catalytic outer layer 23. Accordingly, vanadium is not completely leached out of the coating. Using X-ray fluorescence (XRF) techniques, it was established that the amount of residual vanadium after leaching depends on the thickness of the interlayer and the residual vanadium was typically found to be in the range between 40 and 60% of the initial vanadium content prior to leaching. It can be assumed that interlayer plays a role in stabilizing the vanadium species inside the coating even after the leaching step.

### A.2 Chemical Composition

The chemical composition of the electrode was further analyzed using X-Ray Diffraction (XRD) techniques. A typical result for an electrode prepared according to Example 3 is shown in Fig. 3. The x-axis denotes the diffraction angle 2θ and the y-axis denotes the diffraction intensity in arbitrary units (for instance in counts per scan). Line 30 shows the diffraction pattern prior to leaching while line 31 shows the diffraction pattern of the leaching. Before leaching, the spectra show that the crystalline species present on the sample are: Ni (substrate), LiₓNi_{y}O_{z}, and LiNiVO₄/LiV₂O₄. While, after leaching, the same species are present except with the appearance of crystalline Ni(OH)₂. Other samples with less number of Li_{0.5}Ni_{1.5}O₂ cycles (5 or 10) has decreased peak intensity for LiₓNi_{y}O_{z} but the same crystalline species present before and after leaching.

When comparing the XRD results of an electrode of Example 2 with and electrode prepared according Counterexample 8, i.e. according to applicant's Italian patent application IT 2020000020575, it was established that while with the electrode of Counterexample 8, the VO peak essentially disappeared. In contrast, with the electrode according to the present invention, a reduced VO peak could still be observed which means that vanadium is not completely leached out of the coating (not shown in the drawings).

### A.3 Mechanical Stability

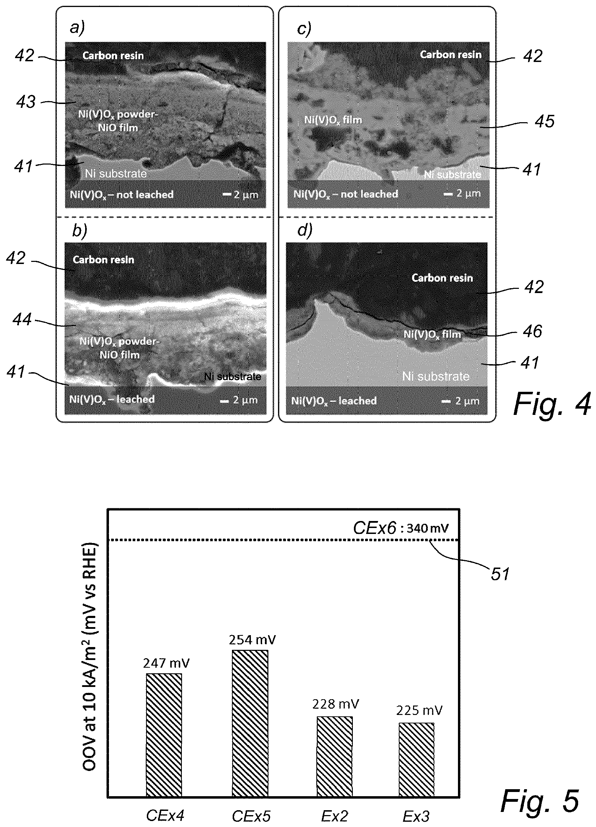

The stability of an electrode according to Example 2 (without interlayer) was compared with an electrode according to Counterexample 8. The effects of the leaching step on the stability of the catalytic outer layer are shown in the SEM images of Fig. 4. In Figures 4 a) and b), cross-sectional views of electrodes according to Example 2 before (a) and after (b) vanadium leaching are shown. Figures 4 c) and d show similar cross-sectional views of electrodes according to Counterexample 8 (i.e. an electrode having a porous Ni(V)Oₓ catalytic coating without preformed/pre-synthesized particles) before (c) and after (d) vanadium leaching. In Fig. 4, reference sign 41 denotes the nickel substrate and reference sign 42 denotes the carbon resin required for preparing the samples. The porous catalytic outer layer according to the present invention is denoted by reference signs 43 (showing the layer before vanadium leaching) and 44 (showing the layer after vanadium leaching), respectively. The porous catalytic outer layer according to Counterexample 8 is denoted by reference signs 45 (showing the layer before vanadium leaching) and 46 (showing the layer after vanadium leaching), respectively. As can be seen from the images, the porous catalytic outer layer of the present invention which includes preformed particles and nickel oxide binder was more stable upon vanadium leaching and show no substantial shrinking as compared to the Counterexample 8 where vanadium is leached throughout the outer layer resulting in a significant shrinking upon leaching. The average layer thickness in Figures 4a) and 4b) was 16 +/- 2 µm and 15 +/- 2 µm, respectively, as compared to 18 +/- 4 µm and 5 +/- 1 µm in Figures 4c) and 4d), respectively.

### B. Electrochemical Coating Characteristics

### B.1 Oxygen Overvoltage

A "Corrected Impedance Single Electrode Potential" (CISEP) test was employed to characterize the electrochemical performance of the electrode of the invention compared to prior art anodes used in alkaline water electrolysis. To determine the oxygen overvoltage of the electrode of the present invention, it has been tested as an anode in a three-electrode beaker-cell. The testing conditions are summarized in Table 1.

**Table 1:**

| | |
|---|---|
| Electrolyte | 25 wt% KOH in deionised H₂O (1.5 l) |
| Temperature | 80°C |
| Cathode | Nickel mesh (projected area 12 cm²) |
| Working anode electrolysis area | projected area 1 cm² |
| Reference electrode | Standard Calomel Electrode (SCE) |

At first, the sample undergoes 2 hours of pre-electrolysis (conditioning) at 10 kA/m² to stabilise the oxygen overvoltage (OOV). Then, several chronopotentiometry steps are applied to the sample. Final output of the CISEP test is the average of the three steps performed at 10 kA/m², corrected by the impedance of the electrolyte.

Fig. 5 summarizes a comparison between Counterexample 4 (bare nickel anode at 340 mV indicated by "base line" 51), the iridium-based anodes of Counterexamples 4 and 5 (CEx 4, CEx5), and the electrodes of Examples 2 and 3 (Ex2, Ex3) of the present invention, respectively.

The energetic saving (more than 120 mV lower oxygen overvoltage OOV than a bare nickel electrode) obtainable with the anode of the present invention solves the problem of the high operational costs given by the sluggish kinetic of the anodic reaction of a uncoated nickel mesh without involving costly noble metals or hazardous manufacturing processes.

### B.2 Lifetime Test

An Accelerated Lifetime Test (ALT) was employed to estimate the lifetime of the catalytic coating. The test consists of long term electrolysis in a beaker cell with a two-electrode set up and a continued electrolysis current directly applied to them. The applied conditions are harsher compared to the one of the CISEP test and are above typical operating conditions in order to accelerate the consumption process.

The conditions employed in the accelerated lifetime test are summarized in Table 2 below:

**Table 2**

| | |
|---|---|
| Electrolyte | 30 wt% KOH in deionised H₂O |
| Current density | 20-40 kA/m² |
| Temperature | 88°C |
| Counter electrode | Nickel mesh |
| Working electrode electrolysis area | 1 cm²-pjt |

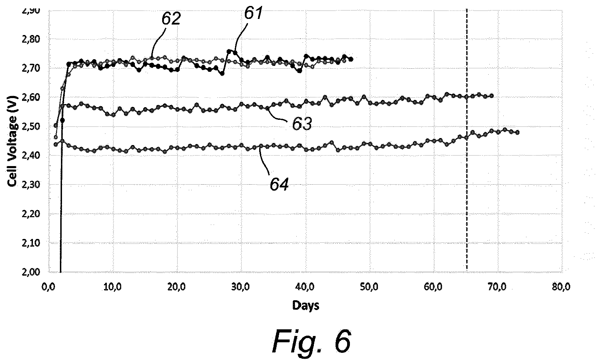

ALT data are shown in Fig. 6. The x-axis denotes the duration of the test in days and the y-axis denotes the cell voltage in volt. Data points 61 indicate the results for a non-coated bare nickel electrode according to Counterexample 6 showing an increase of the cell voltage from 2.5 V to 2.7 V after only a couple of hours of operation. The cell voltage remains stable at 2.7 V indicating that no further deterioration occurred. Data points 62 indicate an electrode coated with a nickel oxide binder layer only according to Counterexample 8 showing an essentially similar behaviour as the bare nickel electrode. Data Points 63 correspond to an electrode according to Example 2, which maintains a lower cell voltage between 2.55 and 2.6 V with only minor increase for more than 60 days. This indicates that the electrode of Example 2 having a highly porous outer catalytic nickel oxide layer (without interlayer) has superior performance in terms of cell voltage compared to the bare nickel electrode. Data points 64 denote a noble metal based electrode according to Counterexample 4 which exhibits an even better performance under the harsh conditions of an ALT test. Nonetheless the electrodes of the present invention which can be manufactured at low costs and which exhibit high mechanical stability and significantly improved electrical efficiency, are well suitable as anodes for alkaline water electrolysis.

The preceding description is not intended to limit the invention, which may be used according to various embodiments without however deviating from the objectives and whose scope is uniquely defined by the appended claims. In the description and in the claims of the present application, the terms "comprising", "including" and "containing" are not intended to exclude the presence of other additional elements, components or process steps. The discussion of documents, items, materials, devices, articles and the like is included in this description solely with the aim of providing a context for the present invention. It is not suggested or represented that any or all of these topics formed part of the prior art or formed a common general knowledge in the field relevant to the present invention before the priority date for each claim of this application.

### Acknowledgement:

This project has received funding from the European Union's Horizon 2020 research and innovation programme under the Marie Sktodowska-Curie grant agreement No 722614 - ELCOREL - H2020-MSCA-ITN-2016/H2020-MSCA-ITN-2016.

## Claims

1. An electrode for gas evolution in electrolytic processes comprising a metal substrate and a coating formed on said substrate, said coating comprising at least a catalytic porous outer layer containing regions of porous nickel oxide dispersed within a solid nickel oxide binder.

2. The electrode according to claim 1, wherein said catalytic porous outer layer is a solid/solid dispersion where solid porous nickel oxide particles are dispersed within said solid nickel oxide binder.

3. The electrode according to one of claims 1 or 2, wherein said catalytic porous outer layer is obtained by thermal treatment of a precursor solution comprising preformed nickel vanadium oxide particles dispersed in a precursor solution containing a nickel salt and subsequent leaching of vanadium oxide from said thermally treated layer.

4. The electrode according to one of claims 1 to 3, wherein said regions of porous nickel oxide have diameters in the range of 50 nm to 10 µm.

5. The electrode according to one of claims 1 to 4, wherein said metal substrate is a substrate selected from the group consisting of nickel-based substrates, titanium-based substrates and iron-based substrates.

6. The electrode according to one of claims 1 to 5, wherein said porous outer layer consists of nickel oxide and nickel hydroxide and optionally residual vandium.

7. The electrode according to one of claims 1 to 6, wherein regions of porous nickel oxide in said porous outer layer have a surface area of at least 20 m²/g (BET), preferably said surface area is comprised between 20 and 80 m²/g (BET).

8. The electrode according to one of claims 1 to 7, wherein said coating comprises a nickel-based interlayer deposited between said nickel substrate and said catalytic porous outer layer, wherein said nickel-based interlayer is preferably a LiNiOₓ interlayer directly applied on the metal substrate.

9. The electrode according to one of claims 1 to 8, wherein said substrate is a nickel mesh, and wherein said electrode is preferably an anode for oxygen evolution.

10. A method for the production of an electrode as defined in one of the previous claims, comprising the following steps:
a) dispersing preformed nickel vanadium oxide (Ni(V)Oₓ) particles in a solution comprising a nickel salt to obtain a precursor suspension;
b) applying the precursor suspension to a metal substrate to obtain an applied coating;
c) drying the applied coating at a temperature in a range from 80 - 150 °C;
d) calcinating the applied coating at a temperature in a range from 300 - 500 °C;
e) repeating steps b) to d) until a coating having the desired specific load of nickel is obtained;
f) heat treating said coating at a temperature in the range from 300-500 °C;
g) leaching of vanadium from said coating in an alkaline bath.

11. The method of claim 10, wherein said preformed solid nickel vanadium oxide particles in step a) are obtained by pyrolizing a resin based on nickel precursors and vanadium precursors.

12. The method according to one of claims 10 or 11, wherein said solution in step a) comprises water and an alcohol, preferably isopropanol.

13. The method according to one of claims 10 to 12, wherein said nickel salt in step a) is a nickel halide.

14. The method according to one of claims 10 to 13, wherein step g) is carried out in an aqueous alkaline hydroxide solution at a temperature in the range from 60 and 100 °C for a time period between 12 and 36 hours.

15. The method according to one of claims 10 to 14, comprising a step a0) performed before step a) wherein a nickel-based interlayer is applied directly onto the metal substrate.
